# EUROPEAN PATENT SPECIFICATION

(11) **EP 3 758 367 B1**
(45) Date of publication and mention of the grant of the patent: **09.11.2022**
(21) Application number: 19182540.5
(22) Date of filing: 26.06.2019
(51) Int. Cl.: H04N 5/44, H04N 5/50, H04N 17/04

(54) **SIGNAL QUALITY SENSOR, TV SET AND METHOD FOR DETERMINIG TV SIGNAL QUALITY**
SIGNALQUALITÄTSSENSOR, FERNSEHGERÄT UND VERFAHREN ZUR BESTIMMUNG DER FERNSEHSIGNALQUALITÄT
CAPTEUR DE QUALITÉ DE SIGNAL, APPAREIL DE TÉLÉVISION ET PROCÉDÉ POUR DETERMINER LA QUALITE DU SIGNAL DE TÉLÉVISION

(43) Date of publication of application: 30.12.2020
(73) Proprietor: Vestel Elektronik Sanayi ve Ticaret A.S., 45030 Manisa (TR)
(72) Inventor: YILMAZLAR, Ismail, 45030 Manisa (TR)
(74) Representative: Kehl, Ascherl, Liebhoff & Ettmayr Patentanwälte Partnerschaft mbB

(56) References cited:
- US-A1- 2003 065 803
- US-A1- 2008 136 971
- US-B1- 6 201 564

## Description

### TECHNICAL FIELD

The invention relates to a signal quality sensor. Further, the present invention relates to a TV set and a respective method.

### BACKGROUND

Although applicable to any RF device, the present invention will mainly be described in conjunction with TV sets that receive RF signals comprising modulated digital channel data.

Modern media devices like e.g. TV sets may receive media data, like data of TV channels, also called digital channel data, via RF signals. In the media device the digital RF signal is then demodulated to restore the digital channel data.

However, with an increasing number of devices that are capable of wireless communications, the chance of any of such devices interfering with the source signals for the TV set increases. Possible interference sources may for example be GSM, WCDMA, WiMAX, LTE devices, like mobile phones, DECT phones, UMTS/LTE modems, WiFi devices or the like.

Usually, the interference caused by such devices in a TV set will not exceed a critical level, such that a TV channel selected by the user may still be displayed flawlessly. However, in some cases, e.g. when such an emitting device is placed very near to the TV set, the level of the interference may increase to a critical level.

If the interference exceeds the critical level, it may not be possible to reproduce the respective TV channel content correctly. For example, block artifacts may be visible in the images or sound artifacts may be audible.

Document US 2008 / 0 136 971 A1 discloses a high-frequency signal receiver with a diversity antenna. Document US 6 201 564 B1 discloses a method for operating a channel equalizer in a receiver for digital television signals subject to co-channel interference from analog television signals. Document US 2003 / 065 803 A1 discloses a method for communicating requirements of an end-user device to a provider of streamed data, such that the provider may tailor a custom stream.

There is a need for detecting signal quality problems in the source signals delivered to TV sets.

### SUMMARY OF THE INVENTION

The above stated problem is solved by the features of the independent claims. It is understood, that independent claims of a claim category may be formed in analogy to the dependent claims of another claim category.

The present invention is based on the finding that modern communication devices may interfere with the source signals of TV sets. The signals of the communication devices may e.g. radiate into the antenna cable that couples to the TV set or into electrical traces of the TV set's electronics.

The TV set may comprise interference filters to eliminate, i.e. to filter out, such interference signals in the TV set. However, when the interference signals reach a critical level, the interference signals may not be cancelled out sufficiently to provide a flawless image and sound to the user via the TV set.

It is understood, that the TV set may receive digital channel data via RF signals, such as any kind of digital video broadcast signals, like DVB-S, DVB-S2, DVB-T, DVB-T2 or any other digital signa, e.g. SAT-IP (satellite over IP) signals via a WiFi network or the like.

The present invention provides the signal quality sensor that is specifically designed to determine the signal quality in a TV set, especially to determine an insufficient signal quality, that may be caused by interference from other RF devices that may be provided near the TV set or the antenna cable of the TV set.

The signal quality sensor may be used in conjunction with a TV set and may be used in the TV set to determine that a deteriorated video or sound quality may be caused by interference from other RF devices.

The TV set comprises an interference detector configured to detect levels of interference signals in the source signal in a frequency range of a selected channel. The selected channel may refer to a TV channel selected by a user. The TV set also comprises an interference filter that eliminates interference signals in the source signal based on configurable filter coefficients. The interference may be so called co channel interference, CCI, and the interference filters may be provided to specifically reduce the CCI, e.g. as CCI filters.

The interference filters may e.g. be digital filters. Such filters may be applied to a digitalized version of the (RF) source signal, especially prior to demodulation or decoding of the source signal. Possible filters include linear filters that process the respective time varying signals.

A control unit of the TV set may set the filter coefficients to respective values based on the detected interference signals and their respective levels. Usually, the values of the filter coefficients will increase with an increasing level of the interference signals. Usually after setting the filter coefficients, the signal quality of the source signal should be sufficient to correctly demodulate or decode the source signal into the digital channel data.

However, if the level of interference is very high, the filter coefficients may be set to a maximum value, while the signal quality may not be good enough to demodulate or decode the source signal without errors. Therefore, an increased bit error rate may be detected in the digital decoded or demodulated source signal.

To this end, the signal quality sensor comprises a bit error detector configured to detect a bit error rate in a decoded source signal for the selected channel. The term "decoded source signal" refers to the digital signal or digital channel data that is gained by demodulating the received (RF) source signal in the TV set. The TV set comprises a RF input that receives the source signal.

The quality determination unit of the signal quality sensor receives a level of interference signals in the source signal for the selected channel and the values of the filter coefficients for the interference filter. For example, the control unit of the TV set may provide this information to the quality determination unit.

The quality determination unit determines the signal quality to be insufficient if the filter coefficients are set to a maximum value and the bit error rate is above a predetermined threshold value.

The signal quality sensor therefore allows identifying that an external source of RF signals generates interference in the source signal of the TV set and causes loss in image quality of the displayed images, e.g. block artifacts, or glitches in the audio. The TV set may then provide a respective information, e.g. displayed on the display of the TV set, that indicates to the user that a RF device is interfering with the source signal. The user may then remove any RF devices in the vicinity of the TV set.

Further embodiments of the present invention are subject of the further subclaims and of the following description, referring to the drawings.

In an embodiment, the signal quality sensor may comprise a device database configured to store operating frequencies for devices capable of emitting RF signals. The quality determination unit may be configured to determine based on the frequency of the interference signal and the operating frequencies stored in the database which devices emit the interference signals.

It is understood, that a single device or multiple devices may emit interference signals in the frequency range of the respective channel. Therefore, the quality determination unit may determine one or more devices as causing the interference signals based on the frequencies of the interference signals. It is understood, that either an interference detector may be provided in the signal quality sensor to determine the frequencies of the interference signals. Alternatively, this information may be provided to the signal quality sensor by the control unit of the TV set.

The device database may be a database that stores for known devices the respective operating frequencies. The database may e.g. store pairs of device types and the respective operating frequencies, like e.g. "WIFI - Frequency XX", "GSM - Frequency XX", "WCDMA - Frequency XX", "LTE - Frequency XX". It is understood, that since the different communication systems may comprise various channels with different frequencies, multiple entries may be provided in the database for every device.

With the help of the database it is possible to narrow down the source of the interference signals for the respective TV channel.

In another embodiment, the quality determination unit may be configured to output information about the devices that emit the interference signals.

This information may then e.g. be received by the control unit of the TV set. The control unit may then provide information about the device that interferes with the source signal to the user. If the user is e.g. informed an LTE device is interfering with the source signal, he may remove any LTE devices from the TV set, like e.g. a mobile phone placed on a shelve next to the TV set.

In a further embodiment, the quality determination unit may be configured to calculate the difference between the frequencies of the interference signals and the operating frequencies of the devices that are stored in the device database and output information about respective devices if the absolute value of the calculated difference is smaller than the bandwidth of the selected channel.

The respective formula may e.g. be B > I RFDn - IFI, where B is the bandwidth of the selected channel. RFDn is the operating frequency of device "n", and IF is the frequency of the interference signal. This specifically takes into account the measured interference signals and their frequencies. In addition, or as alternative, the following formula may be used to determine the respective device that causes interference, B > I RFDn - RFCI, where B is the bandwidth of the selected channel. RFDn is the operating frequency of device "n", and RFC is the frequency of the selected channel. It is understood, that the frequency IF will be near the frequency RFC, since the interference detector will detect interference signals in the source signal in a frequency range of the selected channel. "In the frequency range" of the selected channel refers to a frequency range in which interference signals may negatively influence the signal quality of the source signal for the respective channel.

In another embodiment, the signal quality sensor may comprise a device detection unit configured to identify devices present in the vicinity of the signal quality sensor or in the vicinity of the TV set based on a predetermined frequency to device type mapping and to store the operating frequencies of the detected devices in the device database together with device type information.

In addition to the devices provided in the device data base as stated above, the device detection unit may be used to fill the device database with data about devices that are actively detected.

The device detection unit may scan the entire frequency range that may be used by the TV set to receive channel signals for the present of RF devices. To this end, the device detection unit may comprise a dedicated antenna or may analyze the source signals received by the TV set.

The frequency to device type mapping may e.g. simply provide a mapping of a frequency in which a signal is detected to the respective device type, like an LTE device, a WCDMA device, a WiMAX device or the like.

It is understood, that the device detection unit may also comprise the capability to extract specific device identification data from the interference signals. Therefore, it is not only possible to identify on which frequencies devices are provided. Instead it may also be possible to provide an ID or other identification data for the respective device.

By providing this information, it may e.g. be possible to detect that an LTE capable mobile phone is causing the interference.

In another embodiment, the control unit of the TV set may therefore be configured to output in the display an indication of the device that causes the interference signals if the signal quality is indicated to be insufficient.

In yet another further embodiment, the signal quality sensor may comprise a user interface configured to receive user-provided device information and to store the user-provided device information in the device database. The user-provided device information may e.g. comprise operating frequencies and/or device types.

This means that a user may e.g. input via a remote control of the TV set, which types of electronic devices he is using in the vicinity of the TV set. The user interface may e.g. provide the user with a selection list that comprises device types, like e.g. smartphone (LTE), smartphone (GSM), WiFi, WCDMA, and the like. The user may then e.g. select a device without specifically defining the used frequencies. The frequencies may be pre-loaded for the different device types in the database. The user may however also be provided with the ability to select specific frequencies and/or add new devices and frequencies to the database.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a signal quality sensor according to the present invention;
Fig. 2 shows a block diagram of another embodiment of a signal quality sensor according to the present invention;
Fig. 3 shows a block diagram of an embodiment of a TV set according to the present invention;
Fig. 4 shows a flow diagram of an embodiment of a method according to the present invention; and
Fig. 5 shows a flow diagram of another embodiment of a method according to the present invention.

In the figures like reference signs denote like elements unless stated otherwise.

### DETAILED DESCRIPTION OF THE DRAWINGS

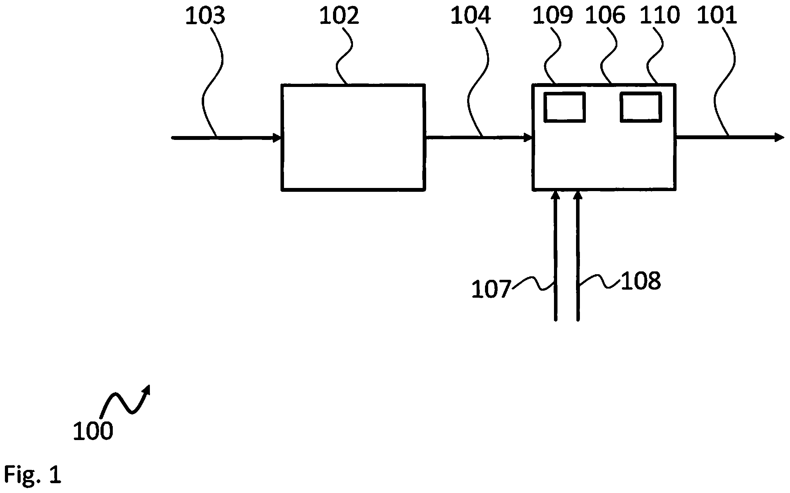

Fig. 1 shows a block diagram of a signal quality sensor 100. The signal quality sensor 100 may be used to determine the signal quality 101 of a source signal in a TV set. The signal quality sensor 100 comprises a bit error detector 102 that is coupled to a quality determination unit 106.

The bit error detector 102 detects a bit error rate 104 in a demodulated or decoded source signal 103 for a selected channel, i.e. in the frequency range of the selected channel. The channel may e.g. be selected by a user of the TV set and the source signal 103 may be provided by the respective element in the TV set that makes use of the signal quality sensor 100.

The quality determination unit 106 receives a level 107 of interference signals in the source signal and values 108 of filter coefficients of an interference filter of the TV set.

During operation the quality determination unit 106 determines the signal quality 101 to be insufficient if the filter coefficients are set to a maximum value 109 and the bit error rate 104 is above a predetermined threshold value 110.

The quality determination unit 106 may e.g. be provided as a dedicated hardware unit, e.g. an ASIC or FPGA or the like. The same applies to the bit error detector 102. As alternative the quality determination unit 106 and/or the bit error detector 102 may e.g. be provided as a computer program product, e.g. as a function of a firmware or the like, that is executed by a processor, e.g. a microcontroller.

It is understood, that the signal quality sensor 100 may e.g. be produced as a dedicated entity. As alternative, the quality determination unit 106 and/or the bit error detector 102 may also be integrated into a control unit of a TV set that makes use of the signal quality sensor 100.

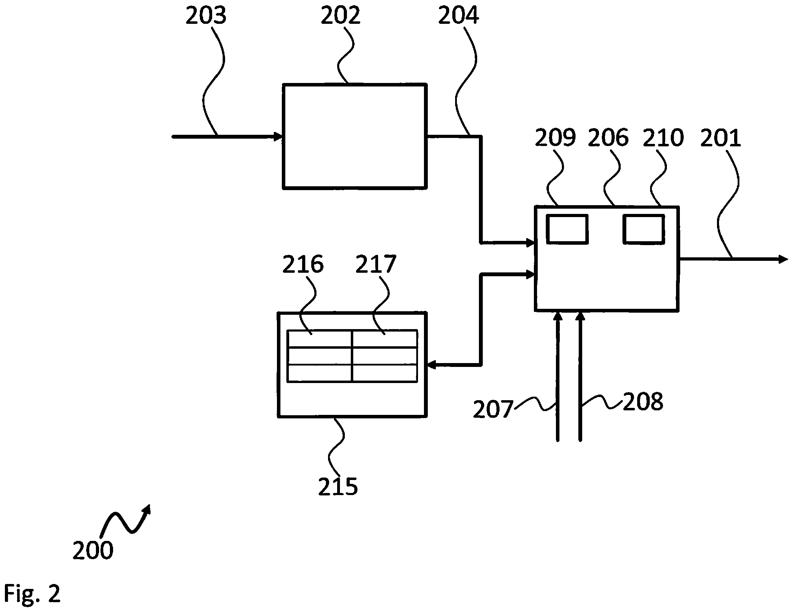

Fig. 2 shows a block diagram of another of a signal quality sensor 200. The signal quality sensor 200 is based on the signal quality sensor 100. Therefore, the signal quality sensor 200 also comprises a bit error detector 202 that is coupled to a quality determination unit 206. The above explanations also apply to the bit error detector 202 and the quality determination unit 206.

In addition, in the signal quality sensor 200 a device database 215 is provided. The device database 215 stores pairs of operating frequencies 216 and devices 217 capable of emitting RF signals at the respective operating frequencies 216. Therefore, the quality determination unit 206 may determine based on the frequency of the interference signal and the operating frequencies 216 stored in the database which devices 217 emit the interference signals. The quality determination unit 206 may therefore also output information about the devices 217 that emit the interference signals. This may allow to more easily identify the respective devices 217.

In order to identify a respective device 217, the quality determination unit 206 may calculate the difference between the frequencies of the interference signals and the operating frequencies 216 of the devices 217 that are stored in the device database 215. If the absolute value of the calculated difference is smaller than the bandwidth of the selected channel for an operating frequency 216 the quality determination unit 206 may output information about respective device 217.

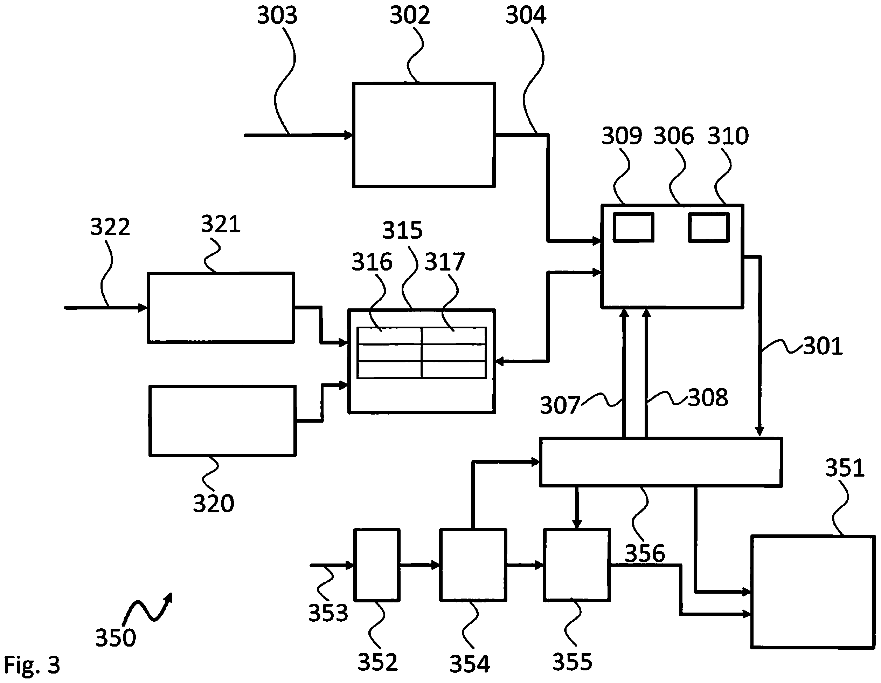

Fig. 3 shows a block diagram of a TV set 350. The TV set 350 comprises RF input 352 for receiving the source signal 353. The RF input 352 is coupled to an interference detector 354. The interference detector 354 provides the source signal 353 to an interference filter 355. The interference filter 355 then provides the filtered source signal 353 to the display 351. It is understood, that the term "display 351" may include any component or element required to decode or demodulate the source signal 353 and to extract the respective digital channel data to display the channel selected by the user. It is also understood, that such elements may be provided anywhere in the signal chain between RF input 352 and display 351.

The interference detector 354 is further coupled to a control unit 356. The control unit 356 is coupled to the interference filter 355, the display 351 and the quality determination unit 306. The quality determination unit 306 provides the control unit 356 with the signal quality 301.

The signal quality sensor of the TV set 350 is not explicitly referenced. However, the signal quality sensor of the TV set 350 is based on the signal quality sensor 200. Therefore, the signal quality sensor of the TV set 350 comprises a bit error detector 302 that is coupled to a quality determination unit 306. The above explanations also apply to the bit error detector 302 and the quality determination unit 306. The signal quality sensor further comprises a device database 315. The device database 315 stores pairs of operating frequencies 316 and devices 317 capable of emitting RF signals at the respective operating frequencies 316.

In addition, the signal quality sensor of the TV set 350 comprises a device detection unit 320 that identifies devices 317 present in the vicinity of the signal quality sensor or in the vicinity of the TV set 350 based on a predetermined frequency to device type mapping. The device detection unit 320 stores the operating frequencies 316 of the detected devices 317 in the device database 315 together with device type information.

Further, a user interface 321 is provided that may be used to receive user-provided device information 322 that may then be stored in the device database 315. The user-provided device information 322 may comprise operating frequencies 316 and/or device types.

During operation, the interference detector 354 detects levels 307 of interference signals in the source signal 353 in a frequency range of a selected channel. The interference filter 355 eliminates interference signals in the source signal 353 based on configurable filter coefficients. The configurable filter coefficients may e.g. be set by the control unit 356 based on the detected interference levels.

The control unit 356 may also provide the signal quality sensor with the detected level 307 of interference signals and the set values 308 of the filter coefficients of the interference filter 355. Further, the control unit 356 receives from the quality determination unit 306 an indication about the signal quality 301.

If the signal is determined to be insufficient, the control unit 356 outputs the indication on a display 351 of the TV set 350. The control unit 356 may especially output in the display 351 an indication of the device 317 that causes the interference signals.

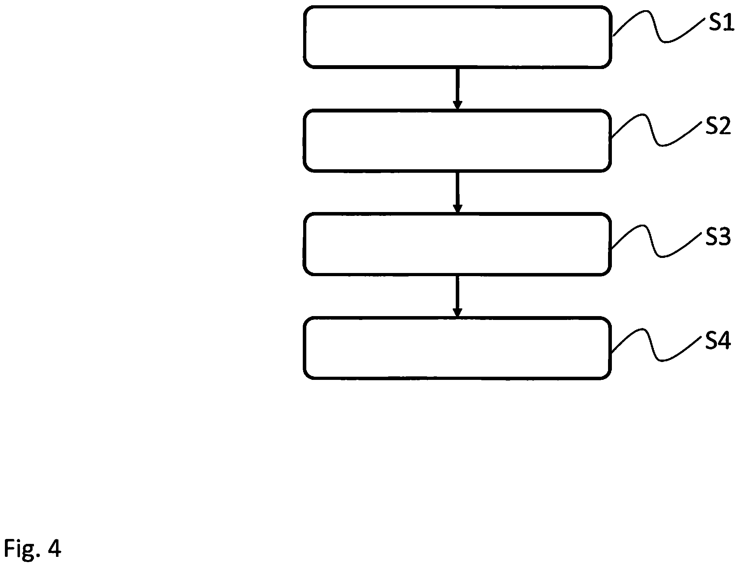

For sake of clarity in the following description of the method-based Fig. 4 the reference signs used above in the description of apparatus-based Figs. 1 - 3 will be maintained.

Fig. 4 shows a flow diagram of an embodiment of a method for determining the signal quality 101, 201, 301 in a TV set 350 with an RF input 352 for receiving a source signal 353 and an interference filter 355.

The method comprises determining S1 a level 107, 207, 307 of interference signals in the source signal 353, eliminating S2 interference signals in the source signal 353 with an interference filter 355 based on configurable filter coefficients, detecting S3 a bit error rate 104, 204, 304 in a decoded source signal 103, 203, 303 for a selected channel, and determining S4 the signal quality 101, 201, 301 to be insufficient if the filter coefficients are set to a maximum value 109, 209, 309 and the bit error rate 104, 204, 304 is above a predetermined threshold value 110, 210, 310.

Further, the method may comprise storing operating frequencies 216, 316 for devices 217, 317 capable of emitting RF signals in a device database 215, 315. This allows determining based on the frequency of the interference signal and the operating frequencies 216, 316 stored in the database which devices 217, 317 emit the interference signals.

To determine a specific device, the method may also comprise calculating the difference between the frequencies of the interference signals and the operating frequencies 216, 316 of the devices 217, 317 that are stored in the device database 215, 315, and outputting information about respective devices 217, 317 if the absolute value of the calculated difference is smaller than the bandwidth of the selected channel. Information about the devices 217, 317 that emit the interference signals may then be output on a display 351 of the TV set 350. This may also include outputting in the display an indication of the specific device 217, 317 that causes the interference signals if the signal quality 101, 201, 301 is indicated to be insufficient.

Devices 217, 317 may be identified in the vicinity of the signal quality sensor 100, 200 or in the vicinity of the TV set 350 based on a predetermined frequency-to-device-type mapping. The operating frequencies 216, 316 of the detected devices 217, 317 may then be stored in the device database 215, 315 together with device type information.

Further, user-provided device information 322 may be received and stored in the user-provided device information 322 in the device database 215, 315, wherein the user-provided device information 322 comprises operating frequencies 216, 316 and/or device types.

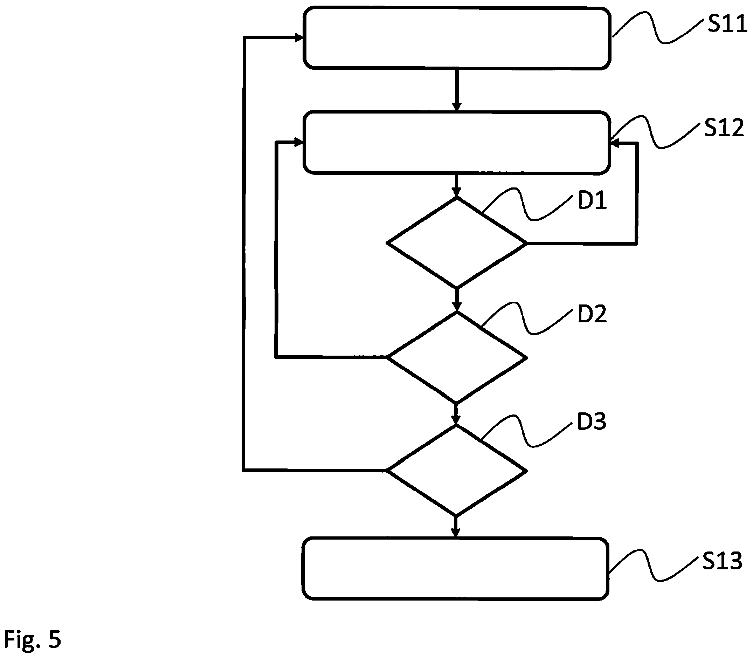

Fig. 5 shows a flow diagram of another embodiment of a method according to the present invention.

The method starts with step S11. In step S12 the values 108, 208, 308 of the filter coefficients are determined. Decision D1 returns to step S12 if the values 108, 208, 308 of the coefficients of the interference filter 355 are lower than respective maximum values 109, 209, 309. If the values 108, 208, 308 of the coefficients of the interference filter 355 are equal to or higher than respective maximum values 109, 209, 309, in decision D2 it is verified if the bit error rate 104, 204, 304 is above a predetermined threshold value 110, 210, 310. If the bit error rate 104, 204, 304 is below the predetermined threshold value 110, 210, 310, the method returns to step S12.

If the bit error rate 104, 204, 304 is higher than the predetermined threshold value 110, 210, 310, in decision D3 the specific device 217, 317 is determined that may cause the interference. The device 217, 317 may be identified as described above, i.e. with respective formulas. The formula may e.g. be B > | RFDn - IF|, where B is the bandwidth of the selected channel. RFDn is the operating frequency of device "n", and IF is the frequency of the interference signal. This specifically takes into account the measured interference signals and their frequencies. In addition, or as alternative, the following formula may be used to determine the respective device that causes interference, B > | RFDn - RFC|, where B is the bandwidth of the selected channel. RFDn is the operating frequency of device "n", and RFC is the frequency of the selected channel.

If a device 217, 317 may be identified, a respective information is provided to the user in step S13, e.g. via a display 351 of a TV set 350.

The present invention provides a signal quality sensor 100, 200 for determining the signal quality 101, 201, 301 in a TV set 350 with an RF input 352 for receiving a source signal 353 and an interference filter 355, the signal quality sensor 100, 200 comprising a bit error detector 102, 202, 302 configured to detect a bit error rate 104, 204, 304 in a decoded source signal 103, 203, 303 for the selected channel, a quality determination unit 106, 206, 306 configured to receive a level 107, 207, 307 of interference signals in the source signal 353 and values 108, 208, 308 of filter coefficients of an interference filter 355 for the source signals 353, wherein the quality determination unit 106, 206, 306 is configured to determine the signal quality 101, 201, 301 to be insufficient if the filter coefficients are set to a maximum value 109, 209, 309 and the bit error rate 104, 204, 304 is above a predetermined threshold value 110, 210, 310. Further, the present invention provides a respective TV set 350 and a respective method.

signal 353 and an interference filter 355, the signal quality sensor 100, 200 comprising a bit error detector 102, 202, 302 configured to detect a bit error rate 104, 204, 304 in a decoded source signal 103, 203, 303 for the selected channel, a quality determination unit 106, 206, 306 configured to receive a level 107, 207, 307 of interference signals in the source signal 353 and values 108, 208, 308 of filter coefficients of an interference filter 355 for the source signals 353, wherein the quality determination unit 106, 206, 306 is configured to determine the signal quality 101, 201, 301 to be insufficient if the filter coefficients are set to a maximum value 109, 209, 309 and the bit error rate 104, 204, 304 is above a predetermined threshold value 110, 210, 310. Further, the present invention provides a respective TV set 350 and a respective method.

### List of reference signs

- 100, 200: signal quality sensor
- 101, 201, 301: signal quality
- 102, 202, 302: bit error detector
- 103, 203, 303: decoded source signal
- 104, 204, 304: bit error rate

- 106, 206, 306: quality determination unit
- 107, 207, 307: level of interference signals
- 108, 208, 308: values of filter coefficients
- 109, 209, 309: maximum value
- 110, 210, 310: threshold value

- 215,315: device database
- 216,316: operating frequencies
- 217,317: devices

- 320: device detection unit
- 321: user interface
- 322: user-provided device information

- 350: TV set
- 351: display
- 352: RF input
- 353: source signal
- 354: interference detector
- 355: interference filter
- 356: control unit

- S1, S2, S3, S4: method steps
- S11, S12, S13: method steps
- D1, D2, D3: decisions

## Claims

1. Signal quality sensor (100, 200) for determining the signal quality (101, 201, 301) in a TV set (350) with an RF input (352) for receiving a source signal (353) and an interference filter (355), the signal quality sensor (100, 200) comprising:
a bit error detector (102, 202, 302) configured to detect a bit error rate (104, 204, 304) in a decoded source signal (103, 203, 303) for a selected channel,
a quality determination unit (106, 206, 306) configured to receive a level (107, 207, 307) of interference signals in the source signal (353) and values (108, 208, 308) of filter coefficients of an interference filter (355) for the source signals (353), wherein the quality determination unit (106, 206, 306) is configured to determine the signal quality (101, 201, 301) to be insufficient if the filter coefficients are set to a maximum value (109, 209, 309) and the bit error rate (104, 204, 304) is above a predetermined threshold value (110, 210, 310)
**characterized by**
comprising a device database (215, 315) configured to store operating frequencies (216, 316) for devices (217, 317) capable of emitting RF signals,
wherein the quality determination unit (106, 206, 306) is configured to determine based on the frequency of the interference signal and the operating frequencies (216, 316) stored in the database which devices (217, 317) emit the interference signals, and wherein the quality determination unit (106, 206, 306) is configured to output information about the devices (217, 317) that emit the interference signals on a display (351) of the TV set (350).

2. Signal quality sensor (100, 200) according to claim 1, wherein the quality determination unit (106, 206, 306) is configured to calculate the difference between the frequencies of the interference signals and the operating frequencies (216, 316) of the devices (217, 317) that are stored in the device database (215, 315) and output information about respective devices (217, 317) if the absolute value of the calculated difference is smaller than the bandwidth of the selected channel.

3. Signal quality sensor (100, 200) according to any one of claims 1 and 2, comprising a device detection unit (320) configured to identify devices (217, 317) present in the vicinity of the signal quality sensor (100, 200) or in the vicinity of the TV set (350) based on a predetermined frequency to device type mapping and to store the operating frequencies (216, 316) of the detected devices (217, 317) in the device database (215, 315) together with device type information.

4. Signal quality sensor (100, 200) according to any one of claims 1 to 3, comprising a user interface (321) configured to receive user-provided device information (322) and to store the user-provided device information (322) in the device database (215, 315),
wherein the user-provided device information (322) comprises operating frequencies (216, 316) and/or device types.

5. TV set (350) comprising:
a RF input (352) configured to receive a source signal (353),
an interference detector (354) configured to detect levels (107, 207, 307) of interference signals in the source signal (353) in a frequency range of a selected channel,
an interference filter (355) configured to eliminate interference signals in the source signal (353) based on configurable filter coefficients,
a control unit (356) configured to set the filter coefficients based on the detected level (107, 207, 307) of interference signals, and
a signal quality sensor (100, 200) according to any one of the preceding claims,
wherein the control unit (356) is configured to provide the signal quality sensor (100, 200) with the detected level (107, 207, 307) of interference signals and the set values of the filter coefficients of the interference filter (355), and
wherein the control unit (356) is configured to receive from the quality determination unit (106, 206, 306) an indication about the signal quality (101, 201, 301) and output the indication on a display (351) of the TV set (350) if the signal quality (101, 201, 301) is indicated to be insufficient.

6. TV set (350) according to claim 5, comprising a signal quality sensor (100, 200) according to any one of claims 3 to 6, wherein the control unit (356) is configured to output in the display (351) an indication of the device (217, 317) that causes the interference signals if the signal quality (101, 201, 301) is indicated to be insufficient.

7. Method for determining the signal quality (101, 201, 301) in a TV set (350) with an RF input (352) for receiving a source signal (353) and an interference filter (355), the method comprising:
determining (S1) a level (107, 207, 307) of interference signals in the source signal (353),
eliminating (S2) interference signals in the source signal (353) with an interference filter (355) based on configurable filter coefficients, and
detecting (S3) a bit error rate (104, 204, 304) in a decoded source signal (103, 203, 303) for a selected channel,
determining (S4) the signal quality (101, 201, 301) to be insufficient if the filter coefficients are set to a maximum value (109, 209, 309) and the bit error rate (104, 204, 304) is above a predetermined threshold value (110, 210, 310),
**characterized by**
further comprising storing operating frequencies (216, 316) for devices (217, 317) capable of emitting RF signals in a device database (215, 315),
determining based on the frequency of the interference signal and the operating frequencies (216, 316) stored in the database which devices (217, 317) emit the interference signals, and outputting information about the devices (217, 317) that emit the interference signals on a display (351) of the TV set (350).

8. Method according to claim 7, comprising calculating the difference between the frequencies of the interference signals and the operating frequencies (216, 316) of the devices (217, 317) that are stored in the device database (215, 315), and outputting information about respective devices (217, 317) if the absolute value of the calculated difference is smaller than the bandwidth of the selected channel.

9. Method according to claim 8, comprising outputting in the display an indication of the device (217, 317) that causes the interference signals if the signal quality (101, 201, 301) is indicated to be insufficient.

10. Method according to any one of claims 7 to 9, identifying devices (217, 317) present in the vicinity of the signal quality sensor (100, 200) or in the vicinity of the TV set (350) based on a predetermined frequency to device type mapping, and storing the operating frequencies (216, 316) of the detected devices (217, 317) in the device database (215, 315) together with device type information.

11. Method according to any one of claims 7 to 10, comprising receiving user-provided device information (322) and storing the user-provided device information (322) in the device database (215, 315),
wherein the user-provided device information (322) comprises operating frequencies (216, 316) and/or device types.

## Patentansprüche

1. Signalqualitätssensor (100, 200) zur Bestimmung der Signalqualität (101, 201, 301) in einem Fernsehgerät (350) mit einem HF-Eingang (352) zum Empfang eines Quellsignals (353) und einem Interferenzfilter (355), wobei der Signalqualitätssensor (100, 200) aufweist:
einen Bitfehlerdetektor (102, 202, 302), der so konfiguriert ist, dass er eine Bitfehlerrate (104, 204, 304) in einem dekodierten Quellsignal (103, 203, 303) für einen ausgewählten Kanal erfasst,
eine Qualitätsbestimmungseinheit (106, 206, 306), die so konfiguriert ist, dass sie einen Pegel (107, 207, 307) von Interferenzsignalen in dem Quellsignal (353) und Werte (108, 208, 308) von Filterkoeffizienten eines Interferenzfilters (355) für die Quellsignale (353) empfängt, wobei die Qualitätsbestimmungseinheit (106, 206, 306) konfiguriert ist, um die Signalqualität (101, 201, 301) als unzureichend zu bestimmen, wenn die Filterkoeffizienten auf einen Maximalwert (109, 209, 309) gesetzt sind und die Bitfehlerrate (104, 204, 304) über einem vorbestimmten Schwellenwert (110, 210, 310) liegt
**gekennzeichnet durch**
das Vorhandensein einer Vorrichtungsdatenbank (215, 315), die so konfiguriert ist, dass sie Betriebsfrequenzen (216, 316) für Vorrichtungen (217, 317) speichert, die in der Lage sind, HF-Signale auszusenden,
wobei die Qualitätsbestimmungseinheit (106, 206, 306) konfiguriert ist, um auf der Basis der Frequenz des Interferenzsignals und der in der Datenbank gespeicherten Betriebsfrequenzen (216, 316) zu bestimmen, welche Vorrichtungen (217, 317) die Interferenzsignale emittieren, und
wobei die Qualitätsbestimmungseinheit (106, 206, 306) konfiguriert ist, um Informationen über die Vorrichtungen (217, 317), die die Interferenzsignale aussenden, auf einem Display (351) des Fernsehgeräts (350) auszugeben.

2. Signalqualitätssensor (100, 200) gemäß Anspruch 1, wobei die Qualitätsbestimmungseinheit (106, 206, 306) konfiguriert ist, die Differenz zwischen den Frequenzen der Interferenzsignale und den Betriebsfrequenzen (216, 316) der Vorrichtungen (217, 317), die in der Vorrichtungsdatenbank (215, 315) gespeichert sind, zu berechnen und Informationen über die jeweiligen Vorrichtungen (217, 317) auszugeben, wenn der Absolutwert der berechneten Differenz kleiner als die Bandbreite des ausgewählten Kanals ist.

3. Signalqualitätssensor (100, 200) gemäß einem der Ansprüche 1 und 2, der eine Vorrichtungserkennungseinheit (320) aufweist, die so konfiguriert ist, dass sie Vorrichtungen (217, 317), die in der Nähe des Signalqualitätssensors (100, 200) oder in der Nähe des Fernsehgeräts (350) vorhanden sind, auf der Basis einer vorgegebenen Frequenz-zu-Vorrichtungstyp-Zuordnung identifiziert und die Betriebsfrequenzen (216, 316) der erkannten Vorrichtungen (217, 317) zusammen mit Vorrichtungstypinformationen in der Vorrichtungsdatenbank (215, 315) speichert.

4. Signalqualitätssensor (100, 200) gemäß einem der Ansprüche 1 bis 3, der eine Benutzerschnittstelle (321) aufweist, die konfiguriert ist, um vom Benutzer bereitgestellte Vorrichtungsinformationen (322) zu empfangen und die vom Benutzer bereitgestellten Vorrichtungsinformationen (322) in der Vorrichtungsdatenbank (215, 315) zu speichern,
wobei die vom Benutzer bereitgestellten Vorrichtungsinformationen (322) Betriebsfrequenzen (216, 316) und/oder Vorrichtungsarten aufweisen.

5. TV-Gerät (350), aufweisend:
einen HF-Eingang (352), der so konfiguriert ist, dass er ein Quellsignal (353) empfängt,
einen Interferenzdetektor (354), der so konfiguriert ist, dass er Pegel (107, 207, 307) von Interferenzsignalen in dem Quellsignal (353) in einem Frequenzbereich eines ausgewählten Kanals erfasst,
einen Interferenzfilter (355), der so konfiguriert ist, dass er Interferenzsignale in dem Quellsignal (353) auf der Grundlage konfigurierbarer Filterkoeffizienten eliminiert,
eine Steuereinheit (356), die so konfiguriert ist, dass sie die Filterkoeffizienten auf der Grundlage des erfassten Pegels (107, 207, 307) der Interferenzsignale einstellt, und
einen Signalqualitätssensor (100, 200) gemäß einem der vorhergehenden Ansprüche,
wobei die Steuereinheit (356) so konfiguriert ist, dass sie dem Signalqualitätssensor (100, 200) den detektierten Pegel (107, 207, 307) der Interferenzsignale und die eingestellten Werte der Filterkoeffizienten des Interferenzfilters (355) bereitstellt, und
wobei die Steuereinheit (356) konfiguriert ist, um von der Qualitätsbestimmungseinheit (106, 206, 306) eine Anzeige über die Signalqualität (101, 201, 301) zu empfangen und die Anzeige auf einem Display (351) des TV-Geräts (350) auszugeben, wenn die Signalqualität (101, 201, 301) als unzureichend angezeigt wird.

6. TV-Gerät (350) gemäß Anspruch 5, das einen Signalqualitätssensor (100, 200) gemäß einem der Ansprüche 3 bis 6 aufweist, wobei die Steuereinheit (356) so konfiguriert ist, dass sie auf dem Display (351) einen Hinweis auf die Vorrichtung (217, 317) ausgibt, die die Interferenzsignale verursacht, wenn die Signalqualität (101, 201, 301) als unzureichend angezeigt wird.

7. Verfahren zur Bestimmung der Signalqualität (101, 201, 301) in einem Fernsehgerät (350) mit einem HF-Eingang (352) zum Empfang eines Quellsignals (353) und einem Interferenzfilter (355), wobei das Verfahren aufweist:
Bestimmen (S1) eines Pegels (107, 207, 307) von Interferenzsignalen in dem Quellsignal (353),
Eliminieren (S2) von Interferenzsignalen in dem Quellsignal (353) mit einem Interferenzfilter (355) auf der Basis von konfigurierbaren Filterkoeffizienten, und
Erfassen (S3) einer Bitfehlerrate (104, 204, 304) in einem decodierten Quellsignal (103, 203, 303) für einen ausgewählten Kanal,
Bestimmen (S4), dass die Signalqualität (101, 201, 301) unzureichend ist, wenn die Filterkoeffizienten auf einen Maximalwert (109, 209, 309) eingestellt sind und die Bitfehlerrate (104, 204, 304) über einem vorbestimmten Schwellenwert (110, 210, 310) liegt,
**gekennzeichnet durch**
ferner das Speichern von Betriebsfrequenzen (216, 316) für Vorrichtungen (217, 317), die in der Lage sind, HF-Signale auszusenden, in einer Vorrichtungsdatenbank (215, 315) aufweist,
Bestimmen auf der Basis der Frequenz des Interferenzsignals und der in der Datenbank gespeicherten Betriebsfrequenzen (216, 316), welche Vorrichtungen (217, 317) die Interferenzsignale aussenden, und Ausgeben von Informationen über die Vorrichtungen (217, 317), die die Interferenzsignale aussenden, auf einem Display (351) des Fernsehgeräts (350).

8. Verfahren gemäß Anspruch 7, aufweisend das Berechnen der Differenz zwischen den Frequenzen der Interferenzsignale und den Betriebsfrequenzen (216, 316) der Vorrichtungen (217, 317), die in der Vorrichtungsdatenbank (215, 315) gespeichert sind, und
Ausgeben von Informationen über entsprechende Vorrichtungen (217, 317), wenn der Absolutwert der berechneten Differenz kleiner ist als die Bandbreite des ausgewählten Kanals.

9. Verfahren gemäß Anspruch 8, aufweisend das Ausgeben eines Hinweises auf die Vorrichtung (217, 317), die die Interferenzsignale verursacht, im Display, wenn die Signalqualität (101, 201, 301) als unzureichend angezeigt wird.

10. Verfahren gemäß einem der Ansprüche 7 bis 9, bei dem Vorrichtungen (217, 317), die sich in der Nähe des Signalqualitätssensors (100, 200) oder in der Nähe des Fernsehgeräts (350) befinden, auf der Basis einer vorgegebenen Frequenz-zu-Vorrichtungstyp-Zuordnung identifiziert werden, und
die Betriebsfrequenzen (216, 316) der detektierten Vorrichtungen (217, 317) in der Vorrichtungsdatenbank (215, 315) zusammen mit Vorrichtungsartinformationen gespeichert werden.

11. Verfahren gemäß einem der Ansprüche 7 bis 10, aufweisend das Empfangen von vom Benutzer bereitgestellten Vorrichtungsinformationen (322) und die Speicherung der vom Benutzer bereitgestellten Vorrichtungsinformationen (322) in der Vorrichtungsdatenbank (215, 315),
wobei die vom Benutzer bereitgestellten Vorrichtungsinformationen (322) Betriebsfrequenzen (216, 316) und/oder Vorrichtungsarten aufweisen.

## Revendications

1. Capteur de qualité de signal (100, 200) pour déterminer la qualité du signal (101, 201, 301) dans un téléviseur (350) avec une entrée RF (352) pour recevoir un signal source (353) et un filtre d'interférence (355), le capteur de qualité de signal (100, 200) comprenant :
un détecteur d'erreurs binaires (102, 202, 302) configuré pour détecter un taux d'erreurs binaires (104, 204, 304) dans un signal source décodé (103, 203, 303) pour un canal sélectionné,
une unité de détermination de qualité (106, 206, 306) configurée pour recevoir un niveau (107, 207, 307) de signaux d'interférence dans le signal source (353) et des valeurs (108, 208, 308) de coefficients de filtre d'un filtre d'interférence (355) pour les signaux source (353), dans laquelle l'unité de détermination de qualité (106, 206, 306) est configurée pour déterminer que la qualité du signal (101, 201, 301) est insuffisante si les coefficients de filtre sont fixés à une valeur maximale (109, 209, 309) et si le taux d'erreur sur les bits (104, 204, 304) est supérieur à une valeur de seuil prédéterminée (110, 210, 310)
**caractérisé par**
comprenant une base de données de dispositifs (215, 315) configurée pour stocker des fréquences de fonctionnement (216, 316) pour des dispositifs (217, 317) capables d'émettre des signaux RF,
dans lequel l'unité de détermination de qualité (106, 206, 306) est configurée pour déterminer, sur la base de la fréquence du signal d'interférence et des fréquences de fonctionnement (216, 316) stockées dans la base de données, quels dispositifs (217, 317) émettent les signaux d'interférence, et
dans lequel l'unité de détermination de qualité (106, 206, 306) est configurée pour sortir des informations concernant les dispositifs (217, 317) qui émettent les signaux d'interférence sur un affichage (351) du poste de télévision (350).

2. Capteur de qualité de signal (100, 200) selon la revendication 1, dans lequel l'unité de détermination de qualité (106, 206, 306) est configurée pour calculer la différence entre les fréquences des signaux d'interférence et les fréquences de fonctionnement (216, 316) des dispositifs (217, 317) qui sont stockées dans la base de données de dispositifs (215, 315) et sortir des informations sur les dispositifs respectifs (217, 317) si la valeur absolue de la différence calculée est inférieure à la largeur de bande du canal sélectionné.

3. Capteur de qualité de signal (100, 200) selon l'une quelconque des revendications 1 et 2, comprenant une unité de détection de dispositif (320) configurée pour identifier des dispositifs (217, 317) présents à proximité du capteur de qualité de signal (100, 200) ou à proximité du poste de télévision (350) sur la base d'une mise en correspondance prédéterminée entre fréquence et type de dispositif et pour stocker les fréquences de fonctionnement (216, 316) des dispositifs détectés (217, 317) dans la base de données de dispositifs (215, 315) avec des informations de type de dispositif.

4. Capteur de qualité de signal (100, 200) selon l'une quelconque des revendications 1 à 3, comprenant une interface utilisateur (321) configurée pour recevoir des informations de dispositif fournies par l'utilisateur (322) et pour stocker les informations de dispositif fournies par l'utilisateur (322) dans la base de données de dispositif (215, 315),
dans lequel les informations de dispositif fournies par l'utilisateur (322) comprennent des fréquences de fonctionnement (216, 316) et/ou des types de dispositif.

5. Poste de télévision (350) comprenant :
une entrée RF (352) configurée pour recevoir un signal source (353),
un détecteur d'interférence (354) configuré pour détecter des niveaux (107, 207, 307) de signaux d'interférence dans le signal source (353) dans une plage de fréquences d'un canal sélectionné,
un filtre d'interférence (355) configuré pour éliminer les signaux d'interférence dans le signal source (353) sur la base de coefficients de filtre configurables,
une unité de commande (356) configurée pour régler les coefficients de filtre sur la base du niveau détecté (107, 207, 307) des signaux d'interférence, et
un capteur de qualité de signal (100, 200) selon l'une quelconque des revendications précédentes,
dans lequel l'unité de commande (356) est configurée pour fournir au capteur de qualité de signal (100, 200) le niveau détecté (107, 207, 307) de signaux d'interférence et les valeurs fixées des coefficients de filtre du filtre d'interférence (355), et
dans lequel l'unité de commande (356) est configurée pour recevoir de l'unité de détermination de la qualité (106, 206, 306) une indication sur la qualité du signal (101, 201, 301) et émettre l'indication sur un affichage (351) du poste de télévision (350) si la qualité du signal (101, 201, 301) est indiquée comme étant insuffisante.

6. Poste de télévision (350) selon la revendication 5, comprenant un capteur de qualité de signal (100, 200) selon l'une quelconque des revendications 3 à 6, dans lequel l'unité de commande (356) est configurée pour sortir sur l'affichage (351) une indication du dispositif (217, 317) qui cause les signaux d'interférence si la qualité du signal (101, 201, 301) est indiquée comme étant insuffisante.

7. Méthode pour déterminer la qualité du signal (101, 201, 301) dans un téléviseur (350) avec une entrée RF (352) pour recevoir un signal source (353) et un filtre d'interférence (355), la méthode comprenant :
la détermination (S1) d'un niveau (107, 207, 307) de signaux d'interférence dans le signal source (353),
éliminer (S2) les signaux d'interférence dans le signal source (353) avec un filtre d'interférence (355) basé sur des coefficients de filtre configurables, et
détecter (S3) un taux d'erreur binaire (104, 204, 304) dans un signal source décodé (103, 203, 303) pour un canal sélectionné,
déterminer (S4) que la qualité du signal (101, 201, 301) est insuffisante si les coefficients de filtrage sont réglés sur une valeur maximale (109, 209, 309) et que le taux d'erreurs sur les bits (104, 204, 304) est supérieur à une valeur de seuil prédéterminée (110, 210, 310),
**caractérisé par**
comprenant en outre le stockage de fréquences de fonctionnement (216, 316) pour des dispositifs (217, 317) capables d'émettre des signaux RF dans une base de données de dispositifs (215, 315),
déterminer, sur la base de la fréquence du signal d'interférence et des fréquences de fonctionnement (216, 316) stockées dans la base de données, quels dispositifs (217, 317) émettent les signaux d'interférence, et délivrer des informations concernant les dispositifs (217, 317) qui émettent les signaux d'interférence sur un écran (351) du poste de télévision (350).

8. Méthode selon la revendication 7, comprenant le calcul de la différence entre les fréquences des signaux d'interférence et les fréquences de fonctionnement (216, 316) des dispositifs (217, 317) qui sont stockées dans la base de données de dispositifs (215, 315), et
délivrer des informations sur les dispositifs respectifs (217, 317) si la valeur absolue de la différence calculée est inférieure à la largeur de bande du canal sélectionné.

9. Méthode selon la revendication 8, comprenant la sortie sur l'affichage d'une indication du dispositif (217, 317) qui cause les signaux d'interférence si la qualité du signal (101, 201, 301) est indiquée comme étant insuffisante.

10. Méthode selon l'une quelconque des revendications 7 à 9, identifiant les dispositifs (217, 317) présents à proximité du capteur de qualité de signal (100, 200) ou à proximité du téléviseur (350) sur la base d'une mise en correspondance prédéterminée entre fréquence et type de dispositif, et
stocker les fréquences de fonctionnement (216, 316) des dispositifs détectés (217, 317) dans la base de données de dispositifs (215, 315) avec des informations de type de dispositif.

11. Méthode selon l'une quelconque des revendications 7 à 10, comprenant la réception d'informations de dispositif fournies par l'utilisateur (322) et le stockage des informations de dispositif fournies par l'utilisateur (322) dans la base de données de dispositifs (215, 315),
dans lequel les informations de dispositif fournies par l'utilisateur (322) comprennent des fréquences de fonctionnement (216, 316) et/ou des types de dispositif.
